(19) **Europäisches Patentamt / European Patent Office / Office européen des brevets**

(11) **EP 3 948 821 B1**

(12) # EUROPEAN PATENT SPECIFICATION

(45) Date of publication and mention of the grant of the patent:
**25.09.2024 Bulletin 2024/39**

(21) Application number: **19828969.6**

(22) Date of filing: **06.12.2019**

(51) International Patent Classification (IPC):
**G08G 1/16** *(2006.01)*

(52) Cooperative Patent Classification (CPC):
**G08G 1/161; B60W 60/0017; G08G 1/166;**
B60W 2420/403

(86) International application number:
**PCT/EP2019/084044**

(87) International publication number:
**WO 2020/200502 (08.10.2020 Gazette 2020/41)**

(54) **METHOD AND SYSTEM FOR SUPPORTING AUTONOMOUS DRIVING OF AN AUTONOMOUS VEHICLE**

VERFAHREN UND SYSTEM ZUR UNTERSTÜTZUNG DES AUTONOMEN FAHRENS EINES AUTONOMEN FAHRZEUGS

PROCÉDÉ ET SYSTÈME DE PRISE EN CHARGE D'UNE CONDUITE AUTONOME D'UN VÉHICULE AUTONOME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.04.2019 EP 19167609**

(43) Date of publication of application:
**09.02.2022 Bulletin 2022/06**

(73) Proprietor: **NEC Corporation**
**Tokyo 108-8001 (JP)**

(72) Inventors:
- **SOLMAZ, Gurkan**
  **69124 Heidelberg (DE)**
- **BERZ, Everton Luis**
  **69126 Heidelberg (DE)**
- **FUERST, Jonathan**
  **69115 Heidelberg (DE)**
- **CHENG, Bin**
  **69214 Eppelheim (DE)**

- **FADEL ARGERICH, Mauricio**
  **69117 Heidelberg (DE)**

(74) Representative: **Ullrich & Naumann PartG mbB**
**Schneidmühlstrasse 21**
**69115 Heidelberg (DE)**

(56) References cited:
**WO-A1-2018/128946    US-A1- 2005 073 438
US-A1- 2018 090 005**

- **BASTANI ZADEH ROYA ET AL: "Three-Phases Smartphone-Based Warning System to Protect Vulnerable Road Users Under Fuzzy Conditions", IEEE TRANSACTIONS ON INTELLIGENT TRANSPORTATION SYSTEMS, IEEE, PISCATAWAY, NJ, USA, vol. 19, no. 7, 1 July 2018 (2018-07-01), pages 2086 - 2098, XP011686319, ISSN: 1524-9050, [retrieved on 20180628], DOI: 10.1109/TITS.2017.2743709**

**Description**

The project leading to this application has received funding from the European Union's Horizon 2020 research and innovation programme under grant agreement No 731993.

The present invention relates to a method and a system for supporting autonomous driving of an autonomous vehicle, in particular in terms of an interaction with a vulnerable road user that is in the vicinity of the autonomous vehicle.

In recent years, there have been major advancements in machine learning research due to increased availability of computation capabilities as well as open datasets (e.g., popularly used labelled image datasets) which allow researchers to easily benchmark their approaches against the state of the art. For example, it is referred to the non-patent literature of A. Geiger, P. Lenz, and R. Urtasun, "Are we ready for Autonomous Driving? The KITTI Vision Benchmark Suite" in Conference on Computer Vision and Pattern Recognition (CVPR), 2012. The KITTI Vision Benchmark Suite is an example of those, specifically used in autonomous driving. Furthermore, the development of machine learning frameworks such as TensorFlow (retrievable at https://www.tensorflow.org/) enables easy prototyping and experimenting with new machine learning systems.

Simultaneously, the concept of Internet of Things (IoT) has been expanding to many domains such as smart cities and smart industries, and it has appealed to more and more researchers in recent years. While various IoT platforms are provided by various major vendors such as Microsoft Azure, AWS IoT, and IBM Watson IoT platform, new large-scale deployments (e.g., city-scale) and experimental testbeds leveraging IoT technologies have become available.

The non-patent literature of R. Bastani Zadeh, M. Ghatee, and H. R.Eftekhari, "Three-Phases Smartphone-Based Warning System to Protect Vulnerable Road Users Under Fuzzy Conditions", IEEE Transactions on Intelligent Transportation Systems, vol. 19, no. 7, pp. 2086-2098, jul 2018 [Online] retrievable at https://ieeexplore.ieee.org/document/8054717/ describes a warning system based on smartphones to protect vulnerable road users. The system is activated by a geometric model and a fuzzy inference engine estimates the collision risk. In real-world evaluation samples, results show a 96% accuracy in six types of accident scenarios.

The non-patent literature of M. Goldhammer, S. Kauhler, S. Zernetsch, K. Doll, B. Sick, and K. Dietmayer, "Intentions of Vulnerable Road Users - Detection and Forecasting by Means of Machine Learning," pp. 1-10, mar 2018 [Online] retrievable at http://arxiv.org/abs/1803.03577 describes movement models based on machine learning methods in order to classify motion state (waiting, starting, moving, stopping) and to predict the future trajectory of vulnerable road users. Results show an accuracy of 88.6% for the motion state classification and a reduction of the trajectory prediction error by 41 % on stopping motion scenarios.

Documents US 2005/073438 A1 and US 2018/090005 A1 both disclose methods for locating and identifying vulnerable road users to provide alerts regarding potential collisions.

In view of the above, it is therefore an objective of the present invention to improve and further develop a method and a system of the initially described type for supporting autonomous driving of an autonomous vehicle in such a way that road safety is improved, in particular in terms of preventing possible accidents between the autonomous vehicle and a vulnerable road user that is in the vicinity of the approaching vehicle.

In accordance with the invention, the aforementioned objective is accomplished by a method for supporting autonomous driving of an autonomous vehicle, in particular in terms of an interaction with a vulnerable road user that is in the vicinity of the autonomous vehicle, the method comprising:

> detecting, by an in-vehicle IoT platform of the autonomous vehicle, a vulnerable road user, 'VRU', having a mobile device in the vicinity of the autonomous vehicle, wherein a mobility application runs on the mobile device of the VRU and sends VRU-specific data to the in-vehicle IoT platform of the autonomous vehicle, wherein the VRU is detected based on the VRU-specific data and/or in-vehicle sensor data of the autonomous vehicle;
> determining, by the in-vehicle IoT platform, a movement intention prediction for the VRU based on the VRU-specific data provided by the mobile device, wherein the movement intention prediction is computed by the use of a machine learning model, wherein the VRU-specific data of the mobile device are employed as input data for said machine learning model; and
> performing, by the in-vehicle IoT platform, an autonomous driving decision for the autonomous vehicle based on said movement intention prediction.

Furthermore, the above mentioned objective is accomplished by a system for supporting autonomous driving of an autonomous vehicle, the system comprising an in-vehicle IoT platform that is implemented in the autonomous vehicle and a mobility application running on a mobile device of a vulnerable road user, 'VRU',

> wherein the mobility application running on the mobile device of the VRU is configured to send VRU-specific data to the in-vehicle IoT platform of the autonomous vehicle,
> wherein the in-vehicle IoT platform of the autonomous vehicle is configured to detect the VRU having the mobile device in the vicinity of the autonomous vehicle, wherein the VRU is detected based on the VRU-specific data and/or in-vehicle sensor data of the autonomous vehicle,

wherein the in-vehicle IoT platform is further configured to determine a movement intention prediction for the VRU based on the VRU-specific data provided by the mobile device, wherein the movement intention prediction is computed by the use of a machine learning model, wherein the VRU-specific data of the mobile device are employed as input data for said machine learning model, and

wherein the in-vehicle IoT platform is configured to perform an autonomous driving decision for the autonomous vehicle based on said movement intention prediction.

According to the present invention, it has first been recognized that an enormous improvement with regard to preventing potential accidents and collisions between the vulnerable road user and the approaching autonomous vehicle can be achieved by leveraging useful information coming directly and voluntarily from the vulnerable road user's mobile device. This in contrast to most of the current autonomous driving systems, which focus only on in-built or attached car sensors and road-side units for taking autonomous driving decisions. Thus, according to the invention, an in-vehicle IoT (Internet of Things) platform of the autonomous vehicle is configured to detect a vulnerable road user (VRU) having a mobile device in the vicinity of the autonomous vehicle. A mobility application runs on the mobile device of the VRU and sends VRU-specific data to the in-vehicle IoT platform of the autonomous vehicle, wherein the VRU is detected based on the VRU-specific data provided by the mobile device and/or based on in-vehicle sensor data of the autonomous vehicle. Thus, the VRU may be detected based on a combination of VRU-specific data from the mobile device and in-vehicle sensor data that is acquired/measured by the autonomous vehicle. The in-vehicle IoT platform is further configured to determine a movement intention prediction for the VRU, based on the VRU-specific data provided by the mobile device, wherein the movement intention prediction is computed by the use of a machine learning model. The VRU-specific data of the mobile device are employed as input data for the machine learning model. Then, the in-vehicle IoT platform can perform an autonomous driving decision for the autonomous vehicle based on the previously determined movement intention prediction.

Thus, the present invention provides a method and a system for supporting autonomous driving of an autonomous vehicle, wherein road safety is improved, in particular in terms of preventing possible accidents between the autonomous vehicle and a vulnerable road user that is in the vicinity of the approaching vehicle.

With the advancements in the vehicle to vehicle (V2V) or vehicle to road side as well as vehicle to everything (V2X) communications in the 5G era, the communications from the sensors in the road infrastructure or road side units (RSUs) as well as any mobile device (e.g., smartphone or wearable) close to road side and the car communication can be handled in very short time. Therefore, embodiments of the present invention become more feasible in terms of real-time applicability and usage for improving traffic safety.

The term "machine learning model" may refer to a mathematical representation of a process which can be generated with an algorithm using training data. According to embodiments of the invention, the machine learning model may be an artificial neural network (ANN).

According to embodiments, an exemplary system may include a mobile device, autonomous car(s), an in-vehicle (edge) IoT platform, and a VRU intention-based decision-making software that runs on top of the platform.

The term "movement intention prediction" may be understood, in particular in the claims, preferably in the description as the possible next movement action of the VRU such as of a pedestrian. Thus, the mobile device user can be considered as the vulnerable road user that may be a pedestrian in the vicinity of an approaching autonomous vehicle/car. The decision-making of autonomous driving may be supplemented with the outcome of a method or system according to an embodiment of the invention as a complementary input in order to protect the vulnerable pedestrian.

According to embodiments of the invention, it may be provided that, in particular upon detecting of the VRU and prior to determining of the movement intention prediction, a transportation mode of the VRU is determined using a machine learning process. Thus, for example, the machine learning process can determine whether the VRU is a pedestrian or a cyclist. Then, the input data can be fed into a movement intention classifier that computes a movement intention prediction for a VRU using a machine learning model. The machine learning process may include computing the transportation mode of the VRU by the use of a weak supervision-based machine learning model. Weak supervision may be understood as a branch of machine learning for labelling data through noisy or remote labelling sources which are called weak supervisors. Weak supervision enables labelling data through the weak supervisors and therefore avoiding the need for ground-truth collection (labels for peoples' transportation modes). Weak supervised systems such as Snorkel (retrievable at http://snorkel.org) can be used for classifying transport modes through weak supervision.

According to embodiments of the invention, it may be provided that video processing is performed based on image data (footage) that is gathered by a sensor device such as a camera of the autonomous vehicle in order to detect the VRU and/or to determine the transportation mode of the VRU. Thus, high-accuracy detection of the VRU and its classification (i.e., pedestrian or cyclist) can be provided.

According to embodiments of the invention, the VRU-specific data may include sensor data that are collected by one or more sensors of the mobile device of the VRU. For example, the sensor data may comprise location/position data - in particular GNSS data such as GPS data -, accelerometer data and/or gyroscope data. Thus, the outcome of computations with regard to VRU detection and determination of movement intention prediction is improved.

According to embodiments of the invention, the VRU-specific data may include position data, heading angle information and/or (average) speed information of the VRU. Thus, the outcome and accuracy of computations with regard to VRU detection and determination of movement intention prediction is improved.

According to embodiments of the invention, the VRU-specific data may include a trajectory of the VRU. Thus, the outcome and accuracy of computations with regard to VRU detection and determination of movement intention prediction can be improved.

According to embodiments of the invention, the in-vehicle sensor data may include sensor data that are gathered by one or more sensors of the autonomous vehicle. Thus, the outcome and accuracy of computations with regard to VRU detection and determination of movement intention prediction can be improved.

According to embodiments of the invention, the input data for the machine learning model may further include in-vehicle sensor data of the autonomous vehicle for the VRU. Thus, the outcome and accuracy of computations with regard to VRU detection and determination of movement intention prediction can be improved.

According to embodiments of the invention, the input data for the machine learning model may further include additional data from one or more IoT data sources. This additional information may provide further information relating to an environment in the vicinity of the autonomous vehicle.

According to embodiments of the invention, the additional data may include (online) map data, in particular 3D model data, in order to learn from map features. For example, the map features may include angle to road, distance to road, map landmarks, etc. Thus, the machine learning model (i.e., for instance, the artificial neural network) may learn from the map features and the prediction of the VRU's next movement intention can be determined/computed with higher accuracy.

According to embodiments of the invention, the additional data may include internet service data from one or more internet services, wherein the internet service data include information on weather conditions, traffic lights, live events, and/or traffic situations, in an environment of the vicinity of the autonomous vehicle. Thus, the machine learning model (i.e., for instance, the artificial neural network) may learn from these additional information in order to predict the VRU's next movement intention with higher accuracy.

According to embodiments of the invention, the additional data may include information on event schedules of the VRU. Thus, the outcome and accuracy of computations with regard to the determination of movement intention prediction for the VRU can be improved.

According to embodiments, the input data for the machine learning model may further include information on the movement history of the VRU. The historical user data may include the VRU's previous traffic-related history of any violation such as jaywalking. These data can be considered for probabilistic prediction of the movement intention for the VRU's next walking movement decision.

According to embodiments of the invention, the movement intention prediction that is determined by the machine learning model may represent a user action that is expected to be performed next by the VRU.

According to embodiments of the invention, a set of user actions may be defined for the movement intention prediction that is determinable by the machine learning model, wherein the set of actions comprises waiting, walking straight, turning left, turning right and/or turning back (i.e. U-turn).

Embodiments of the invention may relate to a method or a system which combines IoT data sources such as measurements of autonomous vehicles' sensors, mobile device users' data and other IoT data sources from internet sources such as online map data and event schedules of mobile device users, to improve autonomous driving decisions taken by autonomous vehicles to improve road safety of pedestrians.

Thus, embodiments of the invention may relate to a real-time IoT system for the smart mobility domain. An application scenario for a method or system according to an embodiment may include the following:

    1) an autonomous vehicle/car,
    2) a mobile device user (i.e. the VRU) with a mobility application running on the mobile device,
    3) an in-vehicle IoT platform of the autonomous car,
    4) machine learning software engine implemented on the in-vehicle IoT platform, and
    5) (optional) other vehicles or IoT data sources.

The machine learning software leverages data sources for training such as GPS data from the mobility application and other open datasets as well as online maps to learn from map features.

According to embodiments, the system first detects existence of a vulnerable road user (VRU) that is a pedestrian in the vicinity of an approaching autonomous vehicle/car. If the VRU is using the mobility application, the mobile device of the VRU directly (through V2V) or indirectly (through 4G/5G) transmits VRU-specific data to the in-vehicle IoT platform

of the autonomous vehicle. Then, the machine learning software implemented on the in-vehicle IoT platform of the autonomous vehicle predicts the movement intention of the pedestrian, wherein the movement intention can be defined as the next movement choice with a simple set of actions: for instance, waiting, walking straight, turning left, turning right, and/or turning back.

For determining the movement intention prediction, the machine learning software engine is trained with datasets including location/position data (such as GPS data), heading information, and speed information as well as map features. Furthermore, the machine learning software engine may incorporate data sources such as event schedule (e.g., lecture schedule in a university campus) of the mobile device user, if the data is available in a timely manner. Lastly, the system components on the in-vehicle IoT platform of the autonomous car may decide on the autonomous driving action such as slowing down the car, keeping the same speed, or breaking the car in unsafe situations. This decision is based on VRU detection and pedestrian intention prediction models to assess safety based on information from in-vehicle sensors and mobile device data (i.e. VRU-specific data).

According to embodiments, the data may be collected in the in-vehicle IoT platform. The software engine for VRU detection, the VRU movement intention prediction, and autonomous driving decision may be part of (or may run on top of) the in-vehicle IoT platform. The in-vehicle IoT platform can be considered as an edge component. The communication can be done directly in between the mobile device, autonomous car, or RSU. In the case of internet sources, they can be reached using 4G/5G communications. Some of the internet sources such as lecture schedule in a campus or weather information can be gathered before the pedestrian comes to the road side.

At least one embodiment of the invention may have at least one of the following advantages and characteristics:

- A system and a method according to an embodiment of the invention improve autonomous driving safety by leveraging IoT data sources and mobile device data of pedestrian, whereas most of the current systems rely on car or roadside sensors.

- A system and a method according to an embodiment may complement the current state of the art with additional input to consider before making autonomous decisions. It may be particularly useful in the case of absence of cameras or obstacle presence.

- Embodiments of the invention aim at providing an extra-layer of security for pedestrians by combining different sources of data. In specific places such as smart cities or smart campuses, it may be useful as the people may use the mobility application given by the organization.

- Embodiments of the invention leverage useful information coming directly and voluntarily from pedestrians' mobile devices as well as their IoT information such as their event schedules or internet-based services for scheduled events in urban areas. Embodiments can be considered complementary to existing autonomous driving decision systems and can be used as an additional input for decision-making.

There are several ways how to design and further develop the teaching of the present invention in an advantageous way. To this end it is to be referred to the patent claims subordinate to the independent claims on the one hand and to the following explanation of further embodiments of the invention by way of example, illustrated by the figure on the other hand. In connection with the explanation of the further embodiments of the invention by the aid of the figure, generally further embodiments and further developments of the teaching will be explained.

In the drawing

Fig. 1    is a schematic view illustrating a method or a system according to an embodiment of the invention,

Fig. 2    is a schematic view illustrating an overview of an architecture of a system in accordance with an embodiment of the invention,

Fig. 3    is a schematic view illustrating a pedestrian movement intention prediction model according to an embodiment of the invention,

Fig. 4    is a schematic view illustrating a pedestrian movement intention prediction model according to a further embodiment of the invention,

Fig. 5    is a schematic view illustrating a pedestrian movement intention prediction model according to a further embodiment of the invention,

Fig. 6    is a schematic view illustrating a petri net model for supporting autonomous driving decision making according to an embodiment of the invention, and

Fig. 7    is a schematic view illustrating an interface where pedestrian and vehicle trajectories are visualized for a particular run by animation of real data in discrete time intervals.

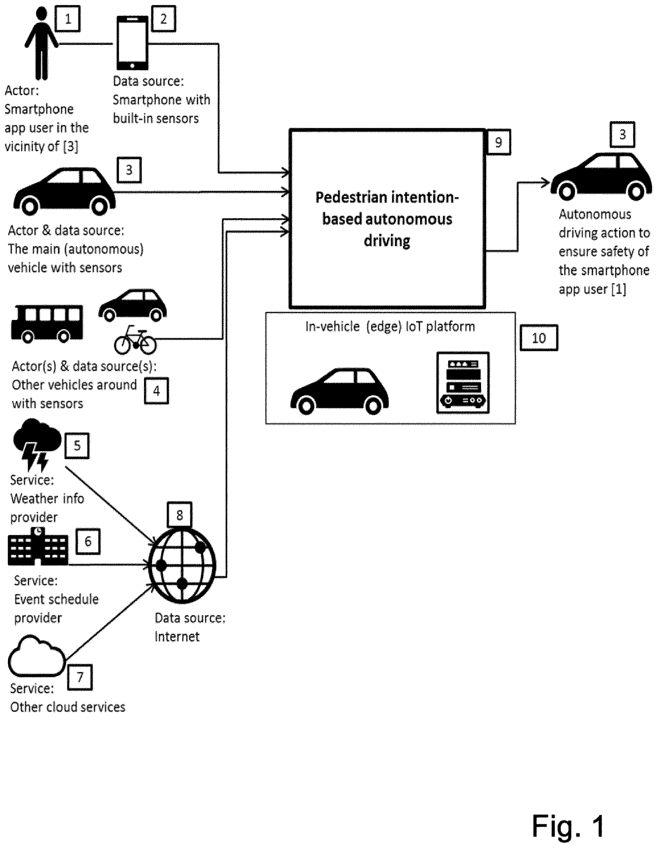

Fig. 1 shows a schematic view illustrating a method or a system according to an embodiment of the invention. Fig. 1 gives a simplistic overview of an idea of pedestrian intention-based autonomous driving in accordance with an embodiment of the invention. A main target of the embodiment is an understanding of pedestrian movement intentions using and combining available IoT (Internet of Things) data sources as well as pre-trained prediction components in-vehicle. Possible data sources and actors listed on the left side of Fig. 1, given as inputs to the autonomous driving, while the outputs are the autonomous driving decisions that are applied to the vehicle/car on the right side of Fig. 1.
The approach according to the embodiment may comprise the following steps:

1) vulnerable road user (VRU) detection,
2) pedestrian intention prediction, and
3) autonomous decision making.

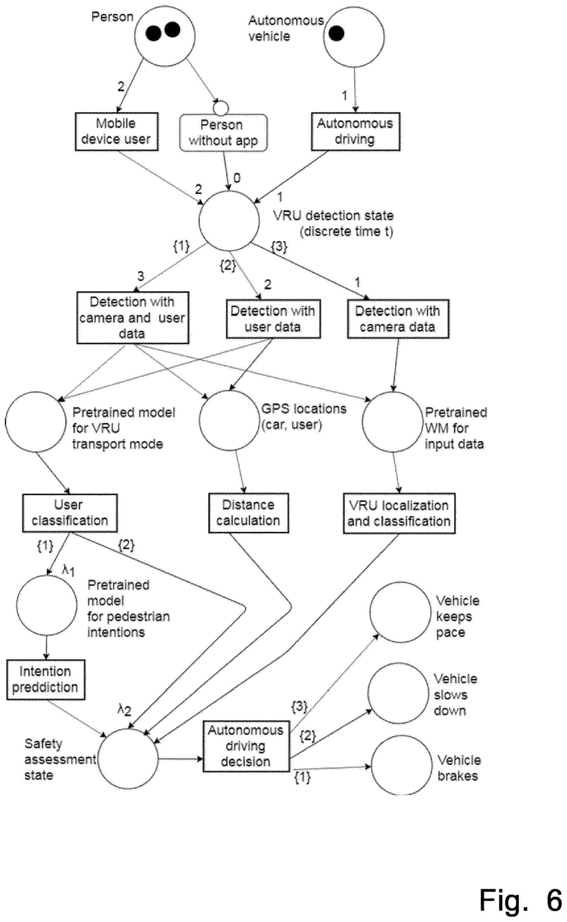

The first step leverages video processing based on footage received from a camera deployed in the vehicle/car for high-accuracy detection of vulnerable road users (VRUs) and their classification (i.e., pedestrian and cyclist). The second step leverages smartphone data (e.g., GPS, gyroscope) and internet sources (e.g., map data) to predict the pedestrian's movement intentions. In the second step, long-term historical data from pedestrians for pre-training may also be used. The third step combines the outcome/output from the first two steps and makes an autonomous driving decision. In this regard, a petri net model for classifying behaviors such as slowing down may be considered, for example as illustrated by Fig. 6.

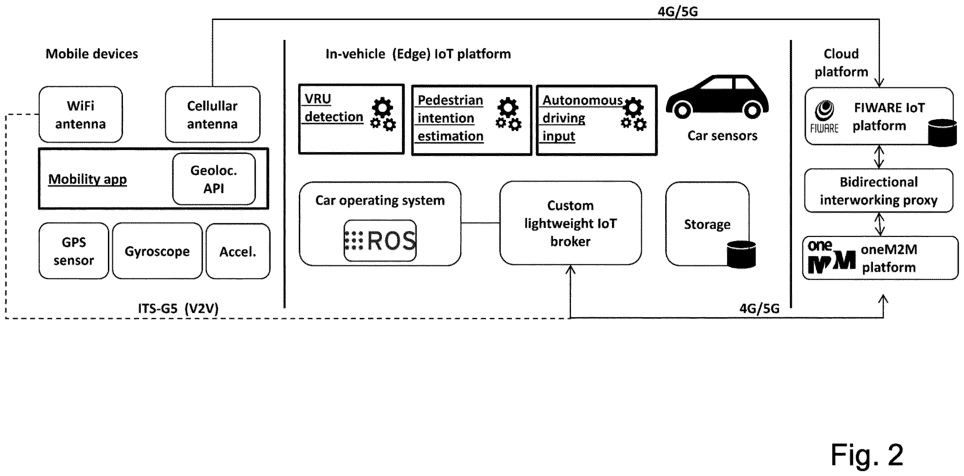

Fig. 2 shows a schematic view illustrating an overview of a system architecture for a method or a system in accordance with an embodiment of the invention. The embodiment illustrated by Fig. 2 comprise three main participants as follows:

- in-vehicle IoT platform,
- mobile device, and
- cloud IoT platform.

The key components relevant to implementing the embodiment for VRU and/or pedestrian intention-based autonomous driving are marked as squared boxes with underlined text in Fig. 2, whereas all other components that may be required are presented in rounded boxes.
The key components of Fig. 2 comprise a mobility application implemented on the mobile device. Further, the key components comprise a VRU detection entity, a pedestrian intention estimation entity and an autonomous driving input entity, which are all implemented on the in-vehicle IoT platform of the car.
In-vehicle IoT platform: The custom-built autonomous car/vehicle of the described embodiment includes various sensors such as cameras, Mobileye, Lidar, and so on. The in-vehicle IoT platform contains a Robot Operating System (ROS), which can be considered as the operating system of the car. ROS receives/collects the data published from various sensors, in-vehicle software components (e.g., analytics, image/video processing components), mobile devices (e.g., the mobility app for smartphones), as well as the cloud platform. The collection from the cloud platform and the mobile devices is supported by a custom-developed lightweight IoT broker component. This component queries/subscribes to these other sources and deliver the data to the ROS. The ROS files are stored in the storage. There are three components, which can also be seen as standalone applications running on the in-vehicle IoT platform. For testing or simulation purposes using collected offline data, VRU detection and pedestrian intention estimation components can be run offline using rosbag files (i.e., simulation using real data). As these components run on ROS environment using the same ROS data, with the same setup they can be transferred to a real setup in the in-vehicle IoT platform. The autonomous driving input component is considered for providing valuable input to autonomous driving by leveraging and combining the outputs of the VRU detection and pedestrian intention estimation.
Mobile device: Any mobile device such as smartphones and wearables with sensors and communication capabilities may be considered as possible components of the system from the VRU side. The system involves the usage of mobile devices by the VRUs. The mobile devices include a set of sensors, antennas for communication, as well as the mobility app, i.e. the mobility application. The sensors of the mobile device include, e.g., GPS, gyroscope and accelerometer. The mobile device push data through 4G communication (or 5G in the near future). The communication capabilities may include vehicle to vehicle (V2V) protocols such as ITS-G5 for direct communication to the vehicle. This communication can be satisfied only in the case that the VRU and the autonomous vehicle are in the wireless range of each other (i.e., less than 100m). The mobility application collects the sensory data and pushes it to the cloud (or optionally to in-vehicle platform). The mobility application uses a geo-location API (Application Programming Interface).

Cloud IoT platform: Although the cloud platform includes various components and different aspects, in this embodiment it is focused on the two standard-based IoT platforms that are mainly used for collecting and providing the VRU mobility-related data: FIWARE (retrievable at https://www.fiware.org/) and oneM2M (retrievable at http://www.onem2m.org/). The data from the mobility application can be pushed to FIWARE IoT platform which is bidirectionally connected to the oneM2M platform through a custom-developed interworking proxy component, which handles the data exchanges and format convergence in between these two standard-based platform.

A system according to an embodiment of the invention such as illustrated by Fig. 2 may perform steps as follows:

Step 1: VRU Detection

Considering a single person as vulnerable road user (VRU), the method may have three cases of VRU detection:

- Case 1: existence of only mobile device data, i.e. the VRU-specific data
- Case 2: existence of only camera data, i.e. in-vehicle sensor data
- Case 3: existence of both camera data and mobile device data for the VRU

In case 1, the location/position data is received from the mobile device into the in-vehicle IoT platform. The location/position data is leveraged for later safety assessment and autonomous driving decision based on that.

In the case 2, the image processing is used. This model extracts all obstacles from image processing and if it is a person, classifies the type of the person (i.e., pedestrian or cyclist) using the images. Moreover, the image processing can compute the relative position of the person to the vehicle.

In the case 3, both camera data and mobile device data are collected in the in-vehicle platform. In this case, the image processing finds the relative positions and combines with the vehicle location data (i.e., GPS) to find the coordinates of the obstacles. Then, the VRU detection compares this information about the coordinates from multiple obstacles with the coordinates available from the mobile device(s). This comparison is performed over multiple image frames for a predetermined period of time (e.g., 8 frames/second) and the best match obstacle is marked as the mobile device user. In this case, the VRU detection is performed using camera data measured by the autonomous vehicle.

Step 2: Transportation Mode Detection

A machine learning model is trained to classify the transportation mode of vulnerable road users. This classification, performed by a machine learning process, is required to identify VRUs such as pedestrians and bicyclists before their data is fed into the movement intention classifier that computes a movement intention prediction for a VRU using a machine learning model (such as an artificial neural network). For not relying on extensive labeling of ground truth transportation modes via crowdsourcing, a weak supervision can be applied to quickly collect vast amounts of noisy training data. Specifically, a weak supervision-based machine learning model is used, where multiple supervisors are defined based on subject matter expert knowledge (e.g., bicycle, pedestrian, car speed constraints, length of trip, sequence of trip segments), geographical information from existing knowledge bases (e.g., bus and train stops from OpenStreetMap) and other integrated third party data sources (e.g., weather data). These labeling functions are applied on detected trips and trip segments that have been integrated with OpenStreetMap and weather data. Based on the resulting probabilistic labels, the machine learning model can then be trained. The provided model is able to generalize the training data and apply it to mobility data from other deployments and cities without a repeated collection of training data (e.g., through crowd-sourcing or manual labeling).

Step 3: VRU/Pedestrian Movement Intentions

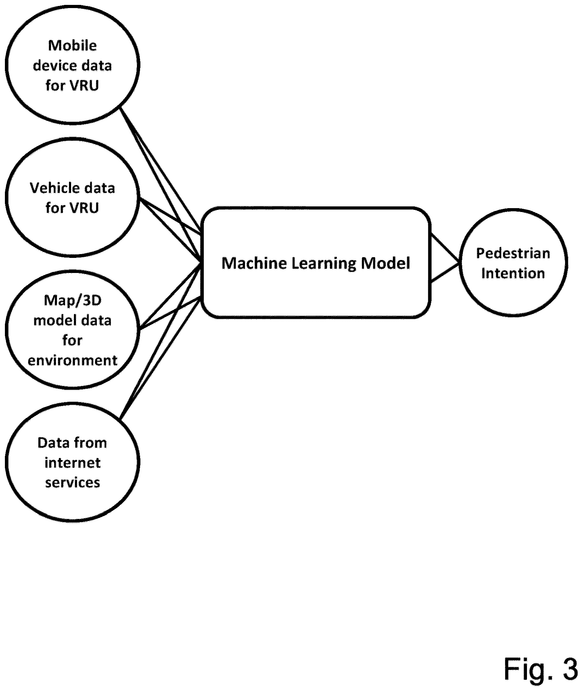

A method in accordance with an embodiment includes a step of estimating/determining the next movement action of hte vulnerable road user. In this regard, it is referred to Fig. 3 that shows a schematic view illustrating a pedestrian movement intention prediction model according to an embodiment of the invention. Specifically, Fig. 3 shows a method of an embodiment that combines personal information, i.e. VRU-specific data coming from the mobile device of the VRU, and in-vehicle sensor data for VRU as well as information from IoT data sources such as map/3D model environmental data and data from internet services. The described data include the latest movement steps (short trajectory) of the pedestrian and mobile devices sensors (e.g., heading), user data (i.e., event schedule, movement history of the user), position of pedestrian using the previous VRU detection step, map features (e.g., distance to road, angle to road), and data from cloud/edge IoT services (e.g., traffic lights, live events/traffic situation/other information in the environment).

The historical user data may include the user's previous traffic-related history of any violation such as jaywalking. These data is considered for probabilistic prediction of the "pedestrian intention" for their next walking movement decisions.

According to embodiments, the proposed machine learning model uses mobile device's sensor data such as the GPS trajectory values of pedestrians in order to predict their next movements. An Artificial Neural Network (ANN) is modelled, consisting of n neurons in the input layer and five neurons as output, where n is the number of steps from the previous pedestrian trajectory from t_1 until t_n, plus the heading angle and average speed information. Each output neuron represents the next movement intention or turn direction of the pedestrian, i.e. waiting, walking straight, turning right, turning left or U-turn (i.e., turning back).

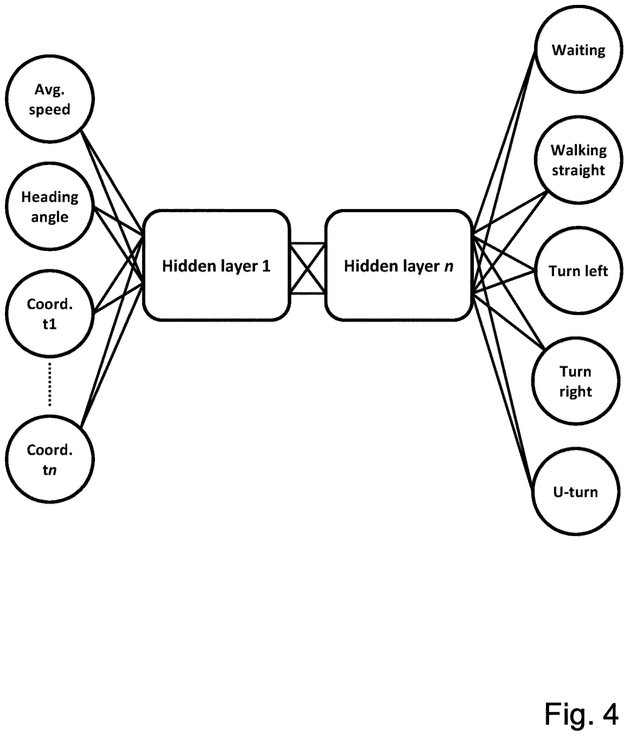

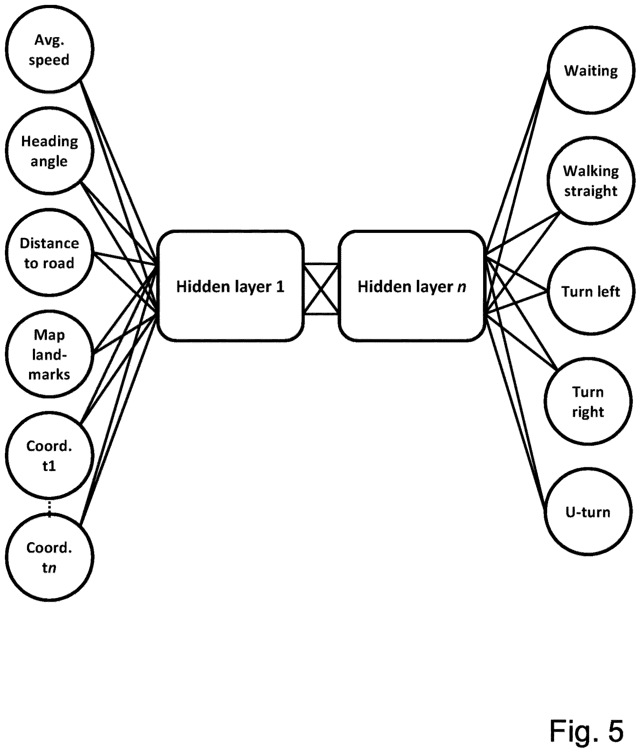

Fig. 4 and Fig. 5 illustrate a neural network model considering a basic ANN (without map features) and an ANN with using map features according to embodiments of the invention. Thus, Fig. 4 shows an example of a neural network model for movement intention prediction of a pedestrian, using only features of the mobile device (not using other IoT sources). Fig. 5 shows a further example of a neural network model for movement intention prediction of a pedestrian, using features of the mobile device together with map features and possibly other IoT sources.

The machine learning model training process is fed by the data collected in the offline phase and the mobile device data, i.e. the VRU-specific data, is partitioned into training, validation and testing datasets.

Based on the concept of data programming, a method according to an embodiment provides heuristic rules applied over a geometric model to help in the creation of labeled training sets. Thus, it is not necessary to manually collect labeled intentions from pedestrians, as the training process uses the results from labeling functions. As part of the labeling function, well-known geometric formulas are applied to calculate the bearing (direction or angle between the north-south line of earth or meridian and the line connecting the target and the reference point) of movement in degrees and, based on this angle and the walked distance, a set of rules are applied to give the turning direction, waiting or walking straight status. Except than the map features using services such as OpenStreetMap, the machine learning model can be extended using other data coming from the mobile device user (i.e. the VRU) such as the appointment schedule (e.g., lecture schedule of a student in a university campus) or the next navigation destination as well as events from the online sources such as large-scale events in a city to improve the movement intention prediction accuracy.

The equation below presents a final labeling function with heuristic rules for state and direction definition:

$$f(a,b,c) = \begin{cases} \text{waiting,} & \text{if } d_{ab} + d_{bc} < T_d \\ \text{right,} & \text{if } (\delta < -180 - T_a) \vee \\ & (\delta > T_a \wedge \delta < 180 - T_a) \\ \text{left,} & \text{if } (\delta > 180 + T_a) \vee \\ & (\delta < 0 - T_a \wedge \delta > -180 + T_a) \\ \text{straight,} & \text{if } \delta \geq 0 - T_a \wedge \delta \leq T_a \\ \text{uturn,} & \text{otherwise,} \end{cases}$$

where *a*, *b* and *c* are two line segments representing the pedestrian trajectory, $\delta$ is the normalized angle of direction from *(a,b)* to *(b,c)*, $d_{xi}$ is the Haversine distance between coordinates *(x,y)*, $T_d$ and $T_a$ are the threshold (tolerance) from the distance and angle of movement, respectively.

Thus, the embodiment combines position information from in-vehicle image processing with the data (i.e. VRU-specific data) from the mobile device for pedestrian movement intention detection. This can be done by finding in the image processing VRU detection results the corresponding mobile device user (i.e., matching image of pedestrian to mobile device data source) for leveraging camera-based positioning when applicable through the aforementioned Step 1 and Step 2 (for only Case 3).

Step 4: Autonomous decision-making

A method in accordance with an embodiment includes a step of performing an autonomous driving decision for the autonomous vehicle/car. How to support autonomous decision-making using the results from the previous steps can be described as follows: Autonomous decision making can be a final step of the proposed procedure. According to embodiments, this step is built on top of the previously described steps. Here, a simple model using stochastic priority petri nets is used in order to illustrate a procedural method. Fig. 6 shows a schematic view illustrating a petri net model for supporting autonomous driving decision making according to an embodiment of the invention.

Specifically, Fig. 6 shows the model with places (big circles), transitions (rectangles), and the tokens at the initial stage. In Fig. 6, λ denotes the probabilistic variables based on the transition step, whereas the curly-braced numbers indicate the priority labels and numbers without curly braces denote the number of tokens.

In the embodiment illustrated by Fig. 6, an existence of two types of people (i.e., vulnerable road users) is considered:

1) mobile device users, meaning the users who downloaded the mobility application in their mobile device, and

2) people without mobility application who may or may not have mobile devices.

The initial places on the top (person and autonomous vehicle) are fired in the case of autonomous driving. In this embodiment, three possible cases during driving are considered:

1) when mobile device user and vehicle camera data both available in the in-vehicle IoT platform,
2) only mobile device data is available,
3) only vehicle camera data is available.

For cases 1) and 3), a pre-trained world model is used to create a list of VRUs and classify them (i.e., pedestrian or cyclist). For case 1), the found VRUs are also matched with the mobile device data. The outputs of the pre-trained model are given for assessing the safety (the bottom-left place).

For case 2), the distance is calculated and given to safety assessment using vehicle and person location data. For case 1), the pre-trained model is used to probabilistically predict the transport mode. In the case of pedestrian mode, the pre-trained model for pedestrian movement intentions is used to predict. This input is also given to the safety assessment. Other than the shown inputs, other vehicle-or person-related data can also be used by the autonomous driving decision making to decide based on a set of final actions (illustrated bottom-right of Fig. 6). For simplicity, three probabilistic actions for safety are defined:

1) keeping the same pace,
2) slowing down,
3) breaking.

An extended model might be applied for more complex behaviors.

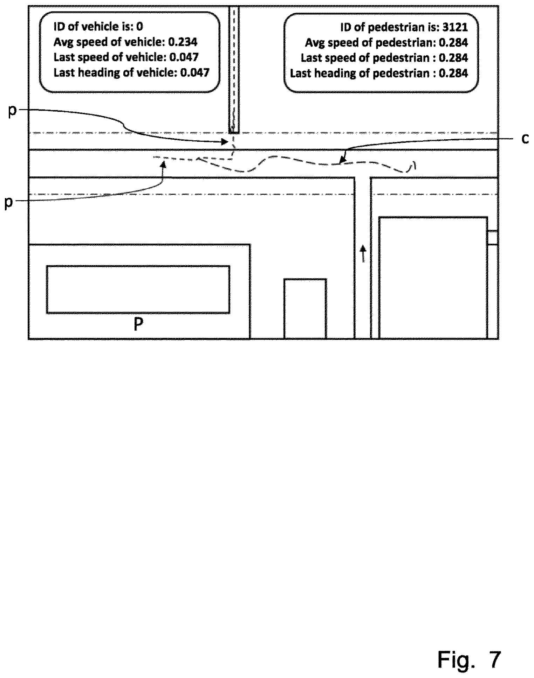

Finally, Fig. 7 shows a schematic view illustrating an interface where pedestrian and vehicle trajectories are visualized for a particular run by animation of real data in discrete time intervals. Thus, Fig. 7 illustrates the map-view interface for controlled experiments. The short trajectory p on the left side represents the pedestrian. The longer trajectory c on the right side represents the car.

With regard to an evaluation of this embodiment, autonomous driving pilot tests have been conducted mainly at a university campus while some tests are conducted at a business campus. The tests are conducted by collaboration of multiple multi-domain research groups. The university campus has a 2-km road network and 30km/h speed limit for cars. A custom-built autonomous car prototype (Toyota Prius) is used in the tests. The car has a custom mobile ITS-G5 device connected to the in-vehicle IoT platform. Furthermore, two VRUs carry these ITS-G5 devices. The broker in the in-vehicle IoT platform is connected to cloud platforms (oneM2M via MOTT and FIWARE via HTTP) using cellular 4G connection. Integration tests and three pilot tests (each about 1 to 2 weeks-long) are conducted in one-year time period. The data from the pilot tests are collected as rosbag files as well as CSV files. Each software component in the vehicle or the cloud (via the IoT broker) publishes data to ROS in real time. After data collected through controlled experiments, they analyzed to see the performance of the VRU detection as well as the pedestrian intention estimation. As the controlled experiments, 21 experiments (consisting of total 70 70 runs) are conducted where the VRU behavior is predefined, whereas the autonomous driving behaviors are mostly not predefined and the driving is affected by the vehicle sensors or other factors. The controlled experiments includes both autonomous and manual driving modes. Various tools can visualize the experimental data. Fig. 7 shows the interface where the pedestrian and car trajectories for a particular run by animation of the real data in discrete time intervals.

Thus, the embodiment leverages the potential of using IoT technologies (i.e., data sources, platforms) and machine learning for enhancing the autonomous driving in terms of safety and efficiency. It is proposed a method and a system which combines IoT data sources such as measurements of autonomous vehicles' sensors, mobile device users' data and other IoT data sources from Internet such as OpenStreetMap data. The required components of the system includes a mobile device, autonomous car(s), an in-vehicle (edge) IoT platform, and the pedestrian intention-based decision-making software which runs on top of the in-vehicle (edge) IoT platform. Here, the mobile device user is considered as a vulnerable road user who may be a pedestrian in the vicinity of an approaching autonomous car. While the IoT platform receives real-time updates from the IoT data sources, the decision-making is trained via deep neural networks to predict the pedestrians intentions for their next movement decisions using historical data from the custom-developed autonomous car and the data collected from the mobile device mobility application.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1. A method for supporting autonomous driving of an autonomous vehicle, in particular in terms of an interaction with a vulnerable road user that is in the vicinity of the autonomous vehicle, the method comprising:

   detecting, by an in-vehicle IoT platform of the autonomous vehicle, a vulnerable road user, 'VRU', having a mobile device in the vicinity of the autonomous vehicle, by, depending on availability, processing at least one of image data that is gathered by a camera of the autonomous vehicle and VRU-specific data received from a mobility application running on the mobile device of the VRU,
   determining a transportation mode of the VRU based on the image data, determining, by the in-vehicle IoT platform, a movement intention prediction for the VRU based on the VRU-specific data received from the mobile device and based on the transportation mode of the VRU, wherein the movement intention prediction is computed by the use of a machine learning model, wherein the VRU-specific data of the mobile device and the transportation mode are employed as input data for the machine learning model, wherein said input data include information on a movement history of the VRU;
   performing, by the in-vehicle IoT platform, an autonomous driving decision for the autonomous vehicle based on said movement intention prediction,
   wherein the movement intention prediction that is determined by the machine learning model represents a user action that is expected to be performed next by the VRU, and
   wherein a set of user actions is defined for the movement intention prediction that is determinable by the machine learning model, wherein said set of actions comprises waiting, walking straight, turning left, turning right and/or turning back.

2. Method according to claim 1, wherein the transportation mode of the VRU is determined, in particular upon said detecting of the VRU and prior to said determining of the movement intention prediction, using a machine learning process, wherein said machine learning process includes computing the transportation mode of the VRU by the use of a weak supervision-based machine learning model.

3. Method according to claim 1 or 2, wherein video processing is performed based on image data that is gathered by a sensor device, in particular a camera, of the autonomous vehicle in order to detect the VRU and/or to determine the transportation mode of the VRU.

4. Method according to any of claims 1 to 3, wherein the VRU-specific data include sensor data that are collected by one or more sensors of the mobile device of the VRU.

5. Method according to any of claims 1 to 4, wherein the VRU-specific data include position data of the VRU, heading angle information of the VRU and/or speed information of the VRU.

6. Method according to any of claims 1 to 5, wherein the VRU-specific data include a trajectory of the VRU.

7. Method according to any of claims 1 to 6, wherein the in-vehicle sensor data include sensor data that are gathered by one or more sensors of the autonomous vehicle.

8. Method according to any of claims 1 to 7, wherein the input data for said machine learning model further include in-vehicle sensor data of the autonomous vehicle for the VRU.

9. Method according to any of claims 1 to 8, wherein the input data for said machine learning model further include additional data from one or more IoT data sources, in particular for providing information relating to an environment in the vicinity of the autonomous vehicle.

10. Method according to claim 9, wherein said additional data include map data, in particular 3D model data, in order to learn from map features.

11. Method according to 9 or 10, wherein said additional data include internet service data from one or more internet services, wherein the internet service data include information on weather conditions, traffic lights, live events, and/or traffic situations, in an environment of the vicinity of the autonomous vehicle.

12. Method according to any of claims 9 to 11, wherein said additional data include information on event schedules of the VRU.

13. System for supporting autonomous driving of an autonomous vehicle, in particular for executing a method according to any of claims 1 to 12, the system comprising an in-vehicle IoT platform that is implemented in the autonomous vehicle and a mobility application running on a mobile device of a vulnerable road user, 'VRU',

wherein the mobility application running on the mobile device of the VRU is configured to send VRU-specific data to the in-vehicle IoT platform of the autonomous vehicle,
wherein the in-vehicle IoT platform of the autonomous vehicle is configured to detect the VRU having the mobile device in the vicinity of the autonomous vehicle, by, depending on availability, processing at least one of image data that is gathered by a camera of the autonomous vehicle and VRU-specific data received from a mobility application running on the mobile device of the VRU,
wherein the in-vehicle IoT platform is further configured to determine transportation mode of the VRU based on the image data,
wherein the in-vehicle IoT platform is further configured to determine a movement intention prediction for the VRU based on the VRU-specific data received from the mobile device and based on the transportation mode of the VRU, wherein the movement intention prediction is computed by the use of a machine learning model,
wherein the VRU-specific data of the mobile device and based on the transportation mode of the VRU are employed as input data for the machine learning model, wherein said input data include information on a movement history of the VRU,
wherein the in-vehicle IoT platform is configured to perform an autonomous driving decision for the autonomous vehicle based on said movement intention prediction,
wherein the movement intention prediction that is determined by the machine learning model represents a user action that is expected to be performed next by the VRU, and
wherein a set of user actions is defined for the movement intention prediction that is determinable by the machine learning model, wherein said set of actions comprises waiting, walking straight, turning left, turning right and/or turning back.

**Patentansprüche**

1. Ein Verfahren zur Unterstützung des autonomen Fahrens eines autonomen Fahrzeugs, insbesondere im Hinblick auf eine Interaktion mit einem ungeschützten Verkehrsteilnehmer, der sich in der Nähe des autonomen Fahrzeugs befindet, das Verfahren umfassend:

Erkennen eines gefährdeten Verkehrsteilnehmers (VRU), der sich mit einem mobilen Gerät in der Nähe des autonomen Fahrzeugs befindet, durch eine fahrzeuginterne IoT-Plattform des autonomen Fahrzeugs, indem je nach Verfügbarkeit Bilddaten, die von einer Kamera des autonomen Fahrzeugs erfasst werden, und/oder VRU-spezifische Daten, die von einer Mobilitätsanwendung auf dem mobilen Gerät der VRU empfangen werden, verarbeitet werden,
Bestimmung eines Transportmodus der VRU auf der Grundlage der Bilddaten,
Bestimmen einer Bewegungsabsichtsvorhersage für die VRU durch die fahrzeuginterne IoT-Plattform auf der Grundlage der VRU-spezifischen Daten, die von der mobilen Vorrichtung empfangen werden, und auf der Grundlage des Transportmodus der VRU, wobei die Bewegungsabsichtsvorhersage durch die Verwendung eines maschinellen Lernmodells berechnet wird, wobei die VRU-spezifischen Daten der mobilen Vorrichtung und der Transportmodus als Eingabedaten für das maschinelle Lernmodell verwendet werden, wobei die Eingabedaten Informationen über eine Bewegungshistorie der VRU enthalten;
Durchführen einer autonomen Fahrentscheidung für das autonome Fahrzeug durch die fahrzeuginterne IoT-Plattform auf der Grundlage der Vorhersage der Bewegungsabsicht,
wobei die Vorhersage der Bewegungsabsicht, die durch das maschinelle Lernmodell bestimmt wird, eine Benutzeraktion repräsentiert, von der erwartet wird, dass sie als nächstes von der VRU ausgeführt wird, und
wobei ein Satz von Benutzeraktionen für die Vorhersage der Bewegungsabsicht definiert ist, die durch das maschinelle Lernmodell bestimmt werden kann, wobei der Satz von Aktionen Warten, Geradeausgehen, Linksabbiegen, Rechtsabbiegen und/oder Zurückgehen umfasst.

2. Verfahren nach Anspruch 1, wobei der Transportmodus der VRU, insbesondere nach dem Erkennen der VRU und vor der Bestimmung der Bewegungsabsichtsvorhersage, unter Verwendung eines maschinellen Lernprozesses bestimmt wird, wobei der maschinelle Lernprozess ein Berechnen des Transportmodus der VRU durch die Verwendung eines auf schwacher Überwachung basierenden maschinellen Lernmodells umfasst.

3. Verfahren nach Anspruch 1 oder 2, wobei die Videoverarbeitung auf der Grundlage von Bilddaten durchgeführt wird, die von einer Sensorvorrichtung, insbesondere einer Kamera, des autonomen Fahrzeugs erfasst werden, um die VRU zu erkennen und/oder den Transportmodus der VRU zu bestimmen.

4. Verfahren nach einem der Ansprüche 1 bis 3, wobei die VRU-spezifischen Daten Sensordaten umfassen, die von einem oder mehreren Sensoren des mobilen Geräts der VRU erfasst werden.

5. Verfahren nach einem der Ansprüche 1 bis 4, wobei die VRU-spezifischen Daten Positionsdaten der VRU, Kurswinkelinformationen der VRU und/oder Geschwindigkeitsinformationen der VRU umfassen.

6. Verfahren nach einem der Ansprüche 1 bis 5, wobei die VRU-spezifischen Daten eine Trajektorie der VRU enthalten.

7. Verfahren nach einem der Ansprüche 1 bis 6, wobei die fahrzeuginternen Sensordaten Sensordaten umfassen, die von einem oder mehreren Sensoren des autonomen Fahrzeugs erfasst werden.

8. Verfahren nach einem der Ansprüche 1 bis 7, wobei die Eingabedaten für das maschinelle Lernmodell außerdem fahrzeuginterne Sensordaten des autonomen Fahrzeugs für die VRU enthalten.

9. Verfahren nach einem der Ansprüche 1 bis 8, wobei die Eingabedaten für das maschinelle Lernmodell außerdem zusätzliche Daten aus einer oder mehreren IoT-Datenquellen umfassen, insbesondere zur Bereitstellung von Informationen über eine Umgebung in der Nähe des autonomen Fahrzeugs.

10. Verfahren nach Anspruch 9, wobei die zusätzlichen Daten Kartendaten, insbesondere 3D-Modelldaten, umfassen, um aus Kartenmerkmalen zu lernen.

11. Verfahren nach 9 oder 10, wobei die zusätzlichen Daten Internetdienstdaten von einem oder mehreren Internetdiensten umfassen, wobei die Internetdienstdaten Informationen über Wetterbedingungen, Verkehrsampeln, Live-Ereignisse und/oder Verkehrssituationen in einer Umgebung in der Nähe des autonomen Fahrzeugs umfassen.

12. Verfahren nach einem der Ansprüche 9 bis 11, wobei die zusätzlichen Daten Informationen über Ereigniszeitpläne der VRU enthalten.

13. System zur Unterstützung des autonomen Fahrens eines autonomen Fahrzeugs, insbesondere zur Durchführung eines Verfahrens nach einem der Ansprüche 1 bis 12, wobei das System eine fahrzeuginterne IoT-Plattform, die in dem autonomen Fahrzeug implementiert ist, und eine Mobilitätsanwendung umfasst, die auf einem mobilen Gerät eines ungeschützten Verkehrsteilnehmers (VRU) läuft,

wobei die Mobilitätsanwendung, die auf dem mobilen Gerät der VRU läuft, so konfiguriert ist, dass sie VRU-spezifische Daten an die bordeigene IoT-Plattform des autonomen Fahrzeugs sendet,
wobei die fahrzeuginterne IoT-Plattform des autonomen Fahrzeugs so konfiguriert ist, dass sie die VRU mit dem Mobilgerät in der Nähe des autonomen Fahrzeugs erkennt, indem sie je nach Verfügbarkeit Bilddaten, die von einer Kamera des autonomen Fahrzeugs gesammelt werden, und/oder VRU-spezifische Daten verarbeitet, die von einer Mobilitätsanwendung empfangen werden, die auf dem Mobilgerät der VRU läuft,
wobei die fahrzeuginterne IoT-Plattform außerdem so konfiguriert ist, dass sie den Transportmodus der VRU auf der Grundlage der Bilddaten bestimmt,

wobei die fahrzeuginterne IoT-Plattform ferner so konfiguriert ist, dass sie eine Bewegungsabsichtsvorhersage für die VRU auf der Grundlage der von der mobilen Vorrichtung empfangenen VRU-spezifischen Daten und auf der Grundlage des Transportmodus der VRU bestimmt, wobei die Bewegungsabsichtsvorhersage durch die Verwendung eines maschinellen Lernmodells berechnet wird, wobei die VRU-spezifischen Daten der mobilen Vorrichtung und auf der Grundlage des Transportmodus der VRU als Eingabedaten für das maschinelle Lernmodell verwendet werden, wobei die Eingabedaten Informationen über eine Bewegungshistorie der VRU enthalten,

wobei die fahrzeuginterne IoT-Plattform so konfiguriert ist, dass sie eine autonome Fahrentscheidung für das autonome Fahrzeug auf der Grundlage der Bewegungsabsichtsvorhersage durchführt,

wobei die Vorhersage der Bewegungsabsicht, die durch das maschinelle Lernmodell bestimmt wird, eine Benutzeraktion darstellt, von der erwartet wird, dass sie als nächstes von der VRU ausgeführt wird, und

wobei ein Satz von Benutzeraktionen für die Vorhersage der Bewegungsabsicht definiert ist, die durch das maschinelle Lernmodell bestimmt werden kann, wobei der Satz von Aktionen Warten, Geradeausgehen, Linksabbiegen, Rechtsabbiegen und/oder Zurückgehen umfasst.

## Revendications

1. Procédé de prise en charge de conduite autonome d'un véhicule autonome, en particulier en matière d'interaction avec un usager de la route vulnérable qui est à proximité du véhicule autonome, le procédé comprenant :

la détection, par une plate-forme IoT en véhicule du véhicule autonome, d'un usager de la route vulnérable, VRU, ayant un dispositif mobile à proximité du véhicule autonome, par, en fonction d'une disponibilité, le traitement d'au moins l'une parmi des données d'image qui sont recueillies par une caméra du véhicule autonome et des données spécifiques au VRU reçues depuis une application de mobilité s'exécutant sur le dispositif mobile du VRU,

la détermination d'un mode de transport du VRU sur la base des données d'image,

la détermination, par la plate-forme IoT en véhicule, d'une prédiction d'intention de mouvement pour le VRU sur la base des données spécifiques au VRU reçues depuis le dispositif mobile et sur la base du mode de transport du VRU, dans lequel la prédiction d'intention de mouvement est calculée à l'aide d'un modèle d'apprentissage automatique, dans lequel les données spécifiques au VRU du dispositif mobile et le mode de transport sont employés en tant que données d'entrée pour le modèle d'apprentissage automatique, dans lequel lesdites données d'entrée comportent des informations sur un historique de mouvement du VRU ;

la prise, par la plate-forme IoT en véhicule, d'une décision de conduite autonome pour le véhicule autonome sur la base de ladite prédiction d'intention de mouvement,

dans lequel la prédiction d'intention de mouvement qui est déterminée par le modèle d'apprentissage automatique représente une action d'usager qui est censée être réalisée ensuite par le VRU, et

dans lequel un ensemble d'actions d'usager est défini pour la prédiction d'intention de mouvement qui peut être déterminée par le modèle d'apprentissage automatique, dans lequel ledit ensemble d'actions comporte une attente, une marche tout droit, un virage à gauche, un virage à droite et/ou un demi-tour.

2. Procédé selon la revendication 1, dans lequel le mode de transport du VRU est déterminé, en particulier lors de ladite détection du VRU et avant ladite détermination de la prédiction d'intention de mouvement, à l'aide d'un processus d'apprentissage automatique, dans lequel ledit processus d'apprentissage automatique comporte le calcul du mode de transport du VRU à l'aide d'un modèle d'apprentissage automatique basé sur une faible supervision.

3. Procédé selon la revendication 1 ou 2, dans lequel un traitement vidéo est réalisé sur la base de données d'image qui sont recueillies par un dispositif capteur, en particulier une caméra, du véhicule autonome afin de détecter le VRU et/ou de déterminer le mode de transport du VRU.

4. Procédé selon l'une quelconque des revendications 1 à 3, dans lequel les données spécifiques au VRU comportent des données de capteur qui sont collectées par un ou plusieurs capteurs du dispositif mobile du VRU.

5. Procédé selon l'une quelconque des revendications 1 à 4, dans lequel les données spécifiques au VRU comportent des données de position du VRU, des informations d'angle de cap du VRU et/ou des informations de vitesse du VRU.

6. Procédé selon l'une quelconque des revendications 1 à 5, dans lequel les données spécifiques au VRU comportent une trajectoire du VRU.

7. Procédé selon l'une quelconque des revendications 1 à 6, dans lequel les données de capteur en véhicule comportent des données de capteur qui sont recueillies par un ou plusieurs capteurs du véhicule autonome.

8. Procédé selon l'une quelconque des revendications 1 à 7, dans lequel les données d'entrée pour ledit modèle d'apprentissage automatique comportent en outre des données de capteur en véhicule du véhicule autonome pour le VRU.

9. Procédé selon l'une quelconque des revendications 1 à 8, dans lequel les données d'entrée pour ledit modèle d'apprentissage automatique comportent en outre des données supplémentaires provenant d'une ou plusieurs sources de données IoT, en particulier pour fournir des informations relatives à un environnement à proximité du véhicule autonome.

10. Procédé selon la revendication 9, dans lequel lesdites données supplémentaires comportent des données de carte, en particulier des données de modèle 3D, pour un apprentissage à partir de caractéristiques de carte.

11. Procédé selon la revendication 9 ou 10, dans lequel lesdites données supplémentaires comportent des données de services Internet provenant d'un ou plusieurs services Internet, dans lequel les données de services Internet comportent des informations sur des conditions météorologiques, des feux de circulation, des événements en direct, et/ou des situations de circulation dans un environnement à proximité du véhicule autonome.

12. Procédé selon l'une quelconque des revendications 9 à 11, dans lequel lesdites données supplémentaires comportent des informations sur des plannings d'événements du VRU.

13. Système de prise en charge de conduite autonome d'un véhicule autonome, en particulier pour exécuter un procédé selon l'une quelconque des revendications 1 à 12, le système comprenant une plate-forme IoT en véhicule qui est mise en oeuvre dans le véhicule autonome et une application de mobilité s'exécutant sur un dispositif mobile d'un usager de la route vulnérable, VRU,

dans lequel l'application de mobilité s'exécutant sur le dispositif mobile du VRU est configurée pour envoyer des données spécifiques au VRU à la plate-forme IoT en véhicule du véhicule autonome,
dans lequel la plate-forme IoT en véhicule du véhicule autonome est configurée pour détecter le VRU ayant le dispositif mobile à proximité du véhicule autonome, par, en fonction d'une disponibilité, le traitement d'au moins l'une parmi des données d'image qui sont recueillies par une caméra du véhicule autonome et des données spécifiques au VRU reçues depuis une application de mobilité s'exécutant sur le dispositif mobile du VRU,
dans lequel la plate-forme IoT en véhicule est en outre configurée pour déterminer un mode de transport du VRU sur la base des données d'image,
dans lequel la plate-forme IoT en véhicule est en outre configurée pour déterminer une prédiction d'intention de mouvement pour le VRU sur la base des données spécifiques au VRU reçues depuis le dispositif mobile et sur la base du mode de transport du VRU, dans lequel la prédiction d'intention de mouvement est calculée à l'aide d'un modèle d'apprentissage automatique, dans lequel les données spécifiques au VRU du dispositif mobile et le mode de transport du VRU sont employés en tant que données d'entrée pour le modèle d'apprentissage automatique, dans lequel lesdites données d'entrée comportent des informations sur un historique de mouvement du VRU,
dans lequel la plate-forme IoT en véhicule est configurée pour prendre une décision de conduite autonome pour le véhicule autonome sur la base de ladite prédiction d'intention de mouvement,
dans lequel la prédiction d'intention de mouvement qui est déterminée par le modèle d'apprentissage automatique représente une action d'usager qui est censée être réalisée ensuite par le VRU, et
dans lequel un ensemble d'actions d'usager est défini pour la prédiction d'intention de mouvement qui peut être déterminée par le modèle d'apprentissage automatique, dans lequel ledit ensemble d'actions comprend une attente, une marche tout droit, un virage à gauche, un virage à droite et/ou un demi-tour.

Fig. 1

**Mobile devices**

WiFi antenna

Cellullar antenna

Mobility app | Geoloc. API

GPS sensor | Gyroscope | Accel.

ITS-G5 (V2V)

**In-vehicle (Edge) IoT platform**

VRU detection

Pedestrian intention estimation

Autonomous driving input

Car sensors

Car operating system

ROS

Custom lightweight IoT broker

Storage

4G/5G

**Cloud platform**

FIWARE IoT platform

Bidirectional interworking proxy

oneM2M platform

4G/5G

EP 3 948 821 B1

Fig. 2

Fig. 3

Fig. 4

Fig. 5

Fig. 6

ID of vehicle is: 0
Avg speed of vehicle: 0.234
Last speed of vehicle: 0.047
Last heading of vehicle: 0.047

ID of pedestrian is: 3121
Avg speed of pedestrian: 0.284
Last speed of pedestrian : 0.284
Last heading of pedestrian : 0.284

p

c

p

P

Fig. 7

**EP 3 948 821 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2005073438 A1
- US 2018090005 A1

### Non-patent literature cited in the description

- **A. GEIGER ; P. LENZ ; R. URTASUN.** Are we ready for Autonomous Driving? The KITTI Vision Benchmark Suite. *Conference on Computer Vision and Pattern Recognition (CVPR),* 2012
- **R. BASTANI ZADEH ; M. GHATEE ; H. R.EFTEKHARI.** Three-Phases Smartphone-Based Warning System to Protect Vulnerable Road Users Under Fuzzy Conditions. *IEEE Transactions on Intelligent Transportation Systems,* July 2018, vol. 19 (7), 2086-2098, https://ieeexplore.ieee.org/document/8054717
- **M. GOLDHAMMER ; S. KAUHLER ; S. ZERNETSCH ; K. DOLL ; B. SICK ; K. DIETMAYER.** *Intentions of Vulnerable Road Users - Detection and Forecasting by Means of Machine Learning,* March 2018, 1-10, http://arxiv.org/abs/1803.03577